# EUROPEAN PATENT SPECIFICATION

(11) **EP 4 135 138 B1**
(45) Date of publication and mention of the grant of the patent: **28.01.2026**
(21) Application number: 22188988.4
(22) Date of filing: 05.08.2022
(51) Int. Cl.: H02G 3/04, B60L 53/31

(54) **CHARGING STATION, HOUSING, AND METHOD**
LADESTATION, GEHÄUSE UND VERFAHREN
STATION DE CHARGE, BOÎTIER ET PROCÉDÉ

(30) Priority: 09.08.2021 NL 2028939
(43) Date of publication of application: 15.02.2023
(73) Proprietor: Maas Energy B.V., 5692 HB Son en Breugel (NL)
(72) Inventor: MAAS, Hendrikus Adrianus Arnoldus, 5692 HB SON EN BREUGEL (NL)
(74) Representative: EP&C

(56) References cited:
- DE-U1- 202005 001 264
- US-A1- 2010 051 310

## Description

The invention relates to a charging station for charging a vehicle. The invention further relates to a housing for use in a charging station. Further, the invention relates to a method for using a charging station.

A charging station is a device for charging an electric vehicle with electrical energy. A charging station is sometimes alternatively referred to as electric vehicle charging station, electric recharging point, charging port, charging satellite or electric vehicle supply equipment. The charging station connects to a vehicle to provide electrical energy to the battery of that vehicle. When the vehicle is disconnected from the charging station, the vehicle converts the electrical energy stored in the battery into kinetic energy to propel the vehicle.

Charging stations are provided at all kinds of locations where vehicles can be parked. This helps the driver of an electric vehicle to find a parking spot for the vehicle at which the battery of the vehicle can be charged while the vehicle is being parked. This is beneficial, because the current generation of electric vehicles need to be charged often, and charging typically takes a long time, for example 15 minutes or more. The locations where charging stations are located are, for example, parking lots, on the sidewalk next to a parking spot, on private driveways, or at gas stations. A gas station is a facility with one or more gas pumps to provide gasoline or diesel. In addition to the gas pumps, the gas station may have one or more charging stations.

At many of these locations, the charging station is outside and exposed to the elements. The charging station has a housing to protect the electronic components of the charging station inside the housing from rain, snow and dirt. Also, the housing protects the electronic components against physical damage, such as vandalism.

The charging station requires maintenance from time to time. To provide maintenance, a service engineer typically needs access to the components of the charging station inside the housing. To allow access, the housing has a door. By opening the door, the service engineer has access to the space inside the housing.

However, opening the door of the charging station has several disadvantages. Typical doors open sideways, and block a space next to the charging station when opened. Pedestrians that wish to pass the charging station may be blocked in their way by the opened door, or may accidentally bump into the door. A vehicle that is parked close to the charging station may prevent the door from being opened or being opened completely. The charging station known from Chinese utility model CN210881720 tries to reduce these disadvantages by providing a door that is rotatable from a vertical position on the front side of the charging station to a horizontal position on the top side of the charging station. In the vertical position, the door is closed, preventing access to the space inside the housing. In the horizontal position, the door is opened, allowing access to the space inside the housing. However, the known charging station still blocks a space next to the charging station when the door is in the horizontal position. Also, when the known charging station is open, the electric components inside the housing are exposed to rain and dirt.

US 2010/051310 A1 discloses a power post with a vertically disposed post member, in which comprises an electrical receptacle assembly positioned at the upper end of the post. The assembly is held in position within the post by means of a box-like housing which is positioned in a generally rectangular opening that can be closed-off by means of a slidable cover.

Furthermore, DE 20 2005 001264 U1 discloses a media unit fixed to a pedestal. A cabinet is provided to surround the pedestal and to cover the media unit in a non-working position. The media unit can be extended to a working position, to be accessible outside the cabinet.

It is an objective of the invention to provide an improved charging station in view of the disadvantage mentioned above, or to at least provide an alternative charging station.

The objective of the invention is achieved by a charging station for charging a vehicle. The charging station comprises a housing enclosing a space. The housing comprises a door adapted to allow access to the space. The door is moveable along a movement path, relative to the housing, to a first i.e. closed position, a second i.e. first opened position and a third i.e. second opened position. The closed position is located between the first opened position and the second opened position along the movement path. In the closed position, the door blocks access to the space. In the first opened position, the door creates a first opening to allow access to the space. In the second opened position, the door creates a second opening to provide access to the space. The movement path is in a substantially vertical direction. The door is moveable substantially downward along the movement path from the closed position to the first opened position. The door is moveable substantially upward from the closed position to the second opened position.

According to the invention, the door is moveable into three different positions. In the closed position, the door closes the space. In the closed position, the components inside the housing are protected by the door and the housing against rain and dirt and vandalism. By moving the door from the closed position to the first opened position, the first opening is created to allow access to the space. This allows access to some of the components arranged inside the space. For example, these components are components that require maintenance most often. The first opening is large enough to access some components arranged inside the space, whereas the door blocks access to other components arranged inside the space. These other components are protected by the door from rain and dirt. For example, these other components are sensitive components, and/or components that are to be serviced only by specialized service engineers. By moving the door from the closed position to the second opened position, the second opening is created to allow access to the space. The door is moved from the closed position to the second opened position in the opposite direction compared to moving the door from the closed position to the first opened position. By moving the door to the second opened position, the second opening provides access to the components inside the housing. For example, the second opening provides access to different components than the first opening. For example, the door blocks the first opening while the door is in the second opened position. This helps to protect the components which are accessible via the first opening, while only access is desired to components via the second opening.

Because the door is moveable downward along the movement path from the closed position to the first opened position, the first opening is arranged above the door in the closed position. As a result, the first opening is located at an upper part of the charging station, allowing for a convenient height of the first opening. In addition, the first opening is located at a relatively large distance from the ground. This distance is at least the height of the door. Because the first opening is located at the large distance from the ground, it is less likely that dirt will enter the space via the first opening. Because the door is moveable upward from the closed position to the second opened position, the door is able to extend beyond the top of the charging station in the vertical direction. This allows the second opening to be a large opening, which, for example, extends along a majority of the height of the charging station. This allows a convenient access to the space via the second opening.

With the door being moved from the closed position to the first opened position by moving the door substantially downward, it has the advantage that the door provides the least inconvenience when in the first opened position. The risk that other people accidentally bump into the door is minimized. Especially, when the charging station is placed on a pedestal, the door may travel the height of the pedestal without hardly any additional risk for people colliding with the door.

The risk of collision with the door is also minimized when moving the door substantially upward from the closed position to the second opened position. By moving upward, the movement of the door is not hindered by parked cars, bicycles etc., as it would if the door would move horizontally. Because the charging station is placed on a location with sufficient height for people and cars, the door can be safely moved upward without the risk of hitting a ceiling.

The vehicle is, for example, an electric vehicle, such as an electric car. The vehicle is for example a hybrid vehicle, such as a hybrid car. A hybrid vehicle uses both electric energy and energy from the combustion of a combustible fuel to propel the vehicle. The vehicle is, for example, a truck, or a bus, or a boat, or a motorcycle, or a recreational vehicle (RV). For example, the vehicle is an unpowered vehicle. An unpowered vehicle does not have its own power source to propel the unpowered vehicle. Instead, the unpowered vehicle is propelled, for example, by another vehicle. The unpowered vehicle has an electrical system that consumes electric power, but the electrical system is not for propelling the unpowered vehicle. Instead, the electrical system is, for example, for heating the vehicle or cooling the vehicle or lighting the vehicle. Examples of an unpowered vehicle are a trailer and a caravan.

The charging station comprises various components inside the housing. A component is, for example, a printed circuit board (PCB). A component is for example a bolt or a clamp for anchoring an attachment to the charging station. The attachment is an internal attachment or an external attachment. For example, a component is a safety mechanism or a load balancing device. For example, a component is a power converter that converts AC power from the power grid to DC power. The power convert is, for example, adapted to provide DC fast charging of the electric vehicle. For example, a component is a charging unit. The charging unit controls the amount of power sent to the electric vehicle. For example, charging unit controls the amount of electrical current to the vehicle to remain below a certain threshold. For example, charging unit controls the voltage applied to the vehicle to remain below a certain threshold. For example, the charging unit provides AC power to the vehicle to charge the vehicle.

For example, a component is a display. Part of the display is, for example, arranged in an opening of the housing, to make the display visible from outside the housing. A person operating the charging station is, for example, able to operate the charging station using the display. The display is, for example, a touch screen display. The display is, for example, used to display an advertisement. Another part of the display is arranged inside the housing, such as part that has the electrical connections of the display.

For example, the component is an authorization device that is adapted to identify whether someone is authorized to operate the charging station. For example, the authorization device comprises a card reader to read an identity card of a user, and/or comprises a license plate recognition system. The license plate recognition system generates an image of a license plate of the vehicle of the user. Based on the license plate, the user is able to operate the charging station.

For example, a component is a payment terminal. The payment terminal is adapted to arrange payment for use of the charging station. The payment terminal, for example, is adapted to perform credit card payments or bank card payments. The payment terminal has, for example, a communication device to communicate with a payment service provider, such as a bank. Part of the payment terminal is, for example, accessible from outside the housing. For example, the payment terminal is able to receive a bank card or coins. Another part of the payment terminal is arranged inside the housing, such as the part that has the electrical connections of the payment terminal and the communication device.

For example, a component is a power grid connector arranged to connect the charging station to the power grid.

For example, a component is an LED or an array of LEDs. The LED or the LEDs are visible from outside of the charging station, for example via a transparent part of the housing. The electrical connections of the LEDs and the LED driver is arranged inside the space. For example, the LEDs are configured to indicate a status of the charging station. For example, a LED emits a green light if the charging station is ready to be used. The LED emits a red light if the charging station has a malfunction. The LED emits light in a pulsating way during charging of the vehicle.

For example, a component is a Near-Field-Communication (NFC-) device. A user may identify him or herself by holding a token near the NFC-device. For example, the charging station starts charging the vehicle after identifying the token of the user with the NFC-device.

For example, a component is a control system that is configured to operate the charging station, for example by controlling one or more of the components mentioned above. For example, a component is a locking device that is adapted to lock a charging cable to the charging station. By locking the charging cable, unauthorized removal of the charging cable from the charging station is prevented. The control system is adapted to control the locking device. When the control system, for example, determines that the charging of a vehicle has been completed and paid for, or determines via the use of an identity card that the owner of the vehicle wishes to remove the charging cable, the control system unlocks the locking device. For example, the locking device has a switch to manually release the charging cable. The manual release switch can be used in case there is an error with the control system. The manual release switch is arranged inside the space to prevent unauthorized use of the manual release switch.

For example, a component is a mounting device, such as a bracket or a frame or a DIN-rail, for mounting one or more of the components mentioned above to the housing. A DIN-rail provides a standardized way of mounting components, such as an energy meter.

Some components are arranged partly or completely outside the housing. These components are accessible without accessing the space enclosed by the housing. These components allow, for example, a user to operate the charging station in a normal use to charge the user's vehicle. Such components are, for example, the charging socket and the payment terminal. A user that wishes to use the charging station is able to connect the user's electric vehicle to the charging station and pay for the received electrical energy without having access to the space enclosed by the housing. The charging station has, for example, a moveable cover that covers the charging socket to protect the charging socket from rain and dirt. A user is able to move the moveable cover away to access the charging socket. In an example, access to the space inside the housing is only desired in case there is malfunction of the charging station.

The housing is a case enclosing various components of the charging station. For example, the housing is made from an extruded aluminum profile. One or more brackets are mounted, for example welded, inside the space formed by the extruded aluminum profile for supporting the components. For example, the housing comprises multiple panels coupled together. For example, the housing comprises a frame to which panels are connected. For example, the panels enclose the frame. For example, the panels are made from sheet metal, such as steel. For example, the panels are sandwich panels with two outer layers surrounding an inner layer. For example, parts of the housing are made of plastic, such as polycarbonate (PC). For example, metal parts of the housing are electrically connected to an earth leakage braking circuit for safety. For example, the housing comprises wood. The housing may have any suitable shape to enclose the space, such as the shape of a cube or a cuboid. The housing has, for example, a straight surface or a curved surface. The housing has, for example, a tubular shape with rectangular cross section or a circular cross-section or a polygonal cross-section. The housing has, for example, a mounting section for mounting the housing. For example, the mounting section is arranged at a bottom side of the housing to mount the housing to the ground or to a pedestal or to a foundation. In another example, the mounting section is arranged at a side of the housing to mount the housing to a wall or to a lamppost.

The space enclosed by the housing is sufficiently large to accommodate the components in the space. The space is one large space, or comprises a plurality of smaller spaces. For example, the plurality of smaller spaces are separated from each other by a part of the frame of the housing.

The door is, for example, a plate or a panel that is moveable relative to the rest of the housing. The door is, for example, a panel similar to a panel of the rest of the housing. The door is made, for example, of steel or plastic or aluminum. The door is coupled to the housing, for example, via a hinge or a door guide. The door is, for example, provided with a lock to prevent unauthorized opening of the door. For example, the door comprises a first lock to allow the door to move from the closed position to the first opened position. The door comprises a second lock to allow the door to move from the closed position to the first opened position. The lock is, for example, a lock that is operated by using a mechanical key. In another example, the lock is an electronic lock that is operated by using a key card. In another example, the lock is operatable remotely, for example via a remote controller or via an app.

When the door is in the closed position to block access to the space, it is not possible for a human to access the space. One or more small openings may be present in the housing and/or the door. For example, such small openings are for ventilation of the space, or small gaps between the door and the housing. However, the small openings are too small for a human to reach inside the space. When the door creates the first opening and the second opening, these openings are large enough for a human to reach inside the space. For example, a service engineer is able to extend his or her hands inside the space, or to extend a tool like a screwdriver inside the space. The first opening and the second opening are large enough to allow a human to interact with components inside the space.

The movement path is, for example, a path along a straight line or along a curved line, such as a 3D curved line. The movement path is, for example, along a plane.

In an embodiment, the door forms a vertical sidewall of the charging station. As such, the door may extend over substantially the entire height of the charging station and over substantially the entire side thereof. As such, the door may provide access, when arranged in the second opened position, to the space inside the housing along substantially the entire height of the charging station. This may increase the accessibility of the space and may give the side wall of the charging station a smooth outer appearance, preferably without any seams.

In an embodiment, the second opening is larger than the first opening.

According to this embodiment, the first opening is smaller than the second opening. Via the first opening, it is for example possible to access one or more small components or buttons or switches. Even though the first opening is small, the first opening is large enough to have proper access to one or more components. Especially if the first opening provides access only to buttons or switches, the first opening may be very small. For example, the first opening has a height and a width of only a few centimeters. Because the first opening is small, there is only a small risk that dirt or rain contaminates the components in the space via the first opening. In an example, a service engineer uses a cover sheet to cover the first opening from rain. Because the first opening is small, the cover sheet may be small. In case a larger opening than the first opening is required, the door is moved to the second opened position to create the second opening. The larger second opening provides more access to the space inside the housing. For example, the door is in the second opened position when a component inside the housing needs to be replaced. For example, the first opening has a dimension, e.g. height of less than 20 cm, or less than 15 cm or less than 10 cm along the direction of the movement path, whereas the second opening has a dimension, e.g. height of more than 30 cm or more than 50 or more than 70 cm along the direction of the movement path.

In an embodiment, the second opening includes the first opening.

According to this embodiment, the door provides access to the space inside the housing when the door is in the first opened position. When the door is in the second opened position, the door provides the same access as in the first opened position, and additional access. The components that are accessible via the first opening are also accessible via the second opening. Via the second opening, the components that are accessible via the first opening are accessible and in addition other components are accessible as well. By having the second opening including the first opening, the access to the space inside the housing is maximized when the door is in the second opened position. The maximized access helps a service engineer to quickly service various components in the space, or helps to exchange a large component quickly. This embodiment may be beneficial when a component is operatable via the first opening. For example, the component has a button that is accessible via the first opening. However, the component is too large to be replaced via the first opening. By moving the door to the second opened position, the component can be replaced via the second opening.

In an embodiment, the charging station comprises a first component and second component, both arranged in the space. In the first opened position, the door allows access to the first component via the first opening and blocks access to the second component. In the second opened position, the second opening allows access to at least the second component.

According to the embodiment, the door is in a position relative to the housing in the first opened position such that the door forms the first opening, but blocks the second opening. Although the door has moved from the closed position to the first opened position, still a part of the door covers the second opening. Because the door covers the second opening when the door is in the first opened position, no dirt or rain is able to enter the space via the second opening when the door is in the first opened position.

In an example, the housing has a first lock and a second lock. The first lock is configured to unlock the door to move between the closed position and the first opened position, but not between the closed position and the second opened position. The second lock is configured to unlock the door to move between the closed position and the second opened position. The key for the first lock is, for example, provided to the owner of the charging station or to a staff member of the parking exploiting the charging station. With the first key, the owner or the staff member only has access to the space via the first opening, because the second opening is blocked by the door. Via the first opening, only components are accessible that can be operated without special technical knowledge. Such components include, for example, a button or a display or a status indicator or a port for a cable. Via the second opening, sensitive components are accessible that need to be handled by trained service engineers. The trained service engineer has a key for the second lock. Because the trained service engineer has a key for the second lock, the trained service engineer can access the sensitive components via the second opening. Because the door blocks the second opening when the door is in the first opened position, the sensitive components are not accessible for people other than the service engineers. The service engineer may also have the key for the first lock, or the second opening may include the first opening.

In an embodiment, the first component has an interface to operate at least part of the charging station. The first opening allows access to the interface.

According to the embodiment, by moving the door to the first opened position, the interface to operate the charging station becomes accessible via the first opening. The charging station is, for example, provided with a locking device that locks a charging cable to the charging station. The charging cable electrically connects the charging station with an electric vehicle. The locking device locks the charging cable when charging the electric vehicle. The locking device only releases the charging cable, for example, when the bill is paid for the electric energy supplied by the charging station to the electric vehicle. In another example, the locking device only releases the charging cable after the user of the electric vehicle indicates he or she wishes to release the charging cable. This indication may require the use of an identification card, to prevent theft of the charging cable. However, a common error of known charging stations is that the locking device does not release the charging cable, even though it should. By providing access to the interface in the charging station according to the invention, easy access to a release button is provided. When pressing the release button, the locking device releases the charging cable.

In an example, the interface includes an on/off switch to switch the charging station on and off. In an example, the interface includes a reset switch to reset the control system of the charging station. In case of a software malfunction of the charging station, or in case of a software update, the reset switch is used to reset the control system to restart the software.

In an example, the interface includes a communication port, such as an USB-port or a serial port or a parallel port or any other type of communication port. The communication port is used, for example, to provide software to the control system of the charging station. The communication port is used, for example, to obtain information about the charging station, such as a status of one or more components, or the amount of electric energy provided or the number of uses. The communication port is, for example, arranged to provide information about the charging station such as when service was done or is desired, the temperature, and/or the humidity. The communication port is, for example, adapted to communicate with other systems such as a solar panel or an internet database.

In an embodiment, the second component is, e.g. comprises a fastener that is adapted to connect the first component to the housing.

According to the embodiment, the second component comprises a fastener, such as a bolt or a screw or a bracket or a clamp or any other type of component that is able to connect the first component to the housing. Because the door allows access to the first component via the first opening in the first opened position, but blocks access to the second component, the first component can be operated when the door is in the first opened position. However, it is not possible to disconnect the first component from the housing via the first opening, because access to the second component is blocked. Disconnecting the first component from the housing is only possible when the door is in the second opened position. For example, only a service engineer has a key to unlock the door to move the door to the second opened position.

In an embodiment, the housing extends from a first plane to a second plane. In the closed position and in the first opened position, the door is arranged between the first plane and the second plane. In the second opened position, the door is at least partly arranged on a side of the second plane facing way from the first plane.

According to the embodiment, the first plane and the second plane are two vertical planes that are parallel to each other. For example, the left side of the charging station extends along the first plane, and the right side of the charging station extends along the second plane. In the closed position, the door does not extend beyond the left side or the right side. Also, in the first opened position, the door does not extend beyond the left side or the right side. For example, the size of the door extending perpendicular to the first plane and the second plane is smaller than the distance between the first plane and the second plane. This allows the door to move from the closed position to the first opened position without extending beyond the first plane or the second plane. Because the door remains between the first plane and the second plane in the first opened position, the open door causes the least amount of inconvenience when opened in the first opened position. There is especially beneficial, when the first opening is used to access components that require maintenance most often. By moving the door to the second opened position, the door extends partly or completely beyond the second plane on a side of the second plane facing away from the first plane. This allows the second opening to be large enough to provide sufficient access to the space inside the housing. Especially when the first opening is small, the size of the door extending perpendicular to the first plane and second plane can be made large. The large size of the door helps to provide good access to the space inside the housing via the second opening.

In an embodiment, the housing comprises a top panel. The top panel is moveable between a fourth, i.e. blocking position and a fifth, i.e. free position. In the blocking position, the top panel is arranged in the movement path between the closed position and the second opened position. In the free position, the top panel is away from the movement path to allow the door to move from the closed position to the second opened position.

According to this embodiment, the housing has a top panel. The top panel is arranged, for example, at an angle to guide rainwater of the top panel. The angle may, for example be selected in the range between 15° and 45°, for example about 30°. In the blocking position, the top panel blocks the door from moving from the closed position to the second opened position, because the top panel is in the movement path of the door. However, the door is moveable from the closed position to the first opened position, because such movement in the opposite direction. This allows, for example, that non-technical persons are able to move the door from the closed position to the first opened position and vice versa. The non-technical persons can access components via the first opening. However, the non-technical persons cannot access components via the second openings, because the top panel blocks the movement of the door from the closed position to the second opened position. This way, the top panel provides a strong safety mechanism that protects sensitive components that are accessible via the second opening. A service engineer has, for example, a key to unlock the top panel. The service engineer then moves the top panel from the blocking position to the free position. In the free position, the top panel no longer blocks the movement of the door. The service engineer is able to move the door from the closed position to the second opened position to create the second opening.

In another example, the service engineer has a key to unlock the door to move from the closed position to the first opened position to open the first opening. Via the first opening, the service engineer is able to unlock a lock of the top panel. The lock of the top panel is, for example, a simple bolt that is moveable from a lock position to an unlock position. After unlocking the top panel, the service engineer moves the top panel from the blocking position to the free position. This allows the door to be moved from the first opened position to the second opened position.

The movement of the top panel between the blocking position and the free position is, for example, a straight movement, or a rotary movement. For example, the top panel comprises a linear guide to move between the blocking position and the free position. For example, the top panel is rotatable about an axis. In a first rotational position, the top panel is in the blocking position. In a second rotational position, the top panel is in the free position. The top panel extends along the complete top of the charging station or the top panel extends along a part of the top of the charging station.

In an embodiment, the housing comprises a door guide to guide the door along at least a part of the movement path, wherein the door is slidably connected to the door guide.

According to this embodiment, the door is slidable relative to the housing. For example, the door is slidable along a straight line or a curved line. The door guide guides the door completely along the movement path or partly along the movement path. In case the door guide guides the door partly along the movement path, the door guide guides the door, for example, from the closed position to the first opened position, and from the closed position to an intermediate position towards the second opened position. At the intermediate position, the door is moved out of the door guide. As soon as the door is out of the door guide, the door is at the second opened position. By moving the door out of the door guide, the second opening is maximized. The door guide has, for example, a U-shaped profile to guide the door. The door guide has, for example, a rail arranged to cooperate with a rail or with wheels arranged on the door. The door guide comprises, for example, a telescopic slider. The door guide is for example provided with a seal to prevent or limit rain and dirt reaching the space inside the housing.

In an embodiment, the door is detachable from the door guide. The door is detached from the door guide in the second opened position.

According to the embodiment, the door in the second opened position provides a large second opening.

In a further aspect of the invention, there is provided a method for using a charging station, .e.g. according to invention and the embodiments mentioned above. The charging station comprises a housing enclosing a space. The housing comprises a door adapted to allow access to the space. The method comprises the steps of:
- moving the door from a closed position to a first opened position to create a first opening to allow access to the space,
- moving the door in opposite direction from the closed position to a second opened position to create a second opening to allow access to the space.

According to the further aspect of the invention, the door is moveable into three different positions. When moving from the closed position to the first opened position, the first opening is created. The first opening is created to allow access to the space. This allows access to some of the components arranged inside the space. For example, these components are components that require maintenance most often. The first opening is large enough to access some components arranged inside the space, whereas the door blocks access to other components arranged inside the space. These other components are protected by the door from rain and dirt. For example, these other components are sensitive components, or components that are to be serviced only by specialized service engineers. By moving the door from the closed position to the second opened position, the second opening is created to allow access to the space. By moving the door from the closed position to the second opened position in the opposite direction compared to moving the door from the closed position to the first opened position, the door provides access to components that were blocked from access via the first opening. For example, the second opening provides access to different components than the first opening. For example, the door blocks the first opening while the door is in the second opened position. This helps to protect the components which are accessible via the first opening, while only access is required to components via the second opening. For example, the method comprises the step of moving the door to the closed position to block access to the space via the first opening and the second opening.

In an embodiment, the method comprises the steps of:
- operating a first component arranged in the space via the first opening;
- operating a second component arranged in the space via the second opening.

Operating the first component and the second component includes actions that can be performed on or with the first component and/or the second component. For example, operating the first component includes activating a switch or pressing a button of the first component. For example, operating the first component includes connecting or disconnecting an electrical connection to the first component. For example, operating the first component includes mounting or dismounting the first component to or from the housing. For example, operating the first component includes performing a measurement, such as an electric measurement, on the first component. Operating the second component includes the same actions as with operating the first component.

In an embodiment, the step of operating a second component comprises removing the second component from the space.

The invention will be described in more detail below under reference to the figures. The figures show, in a non-limiting manner, exemplary embodiments of the invention. The figures show in:
- Fig. 1:: An embodiment according to the invention, with the door in the closed position,
- Fig. 2:: The embodiment of Fig. 1, with the door in the first opened position,
- Fig. 3:: The embodiment of Fig. 2, with the door in the second opened position.

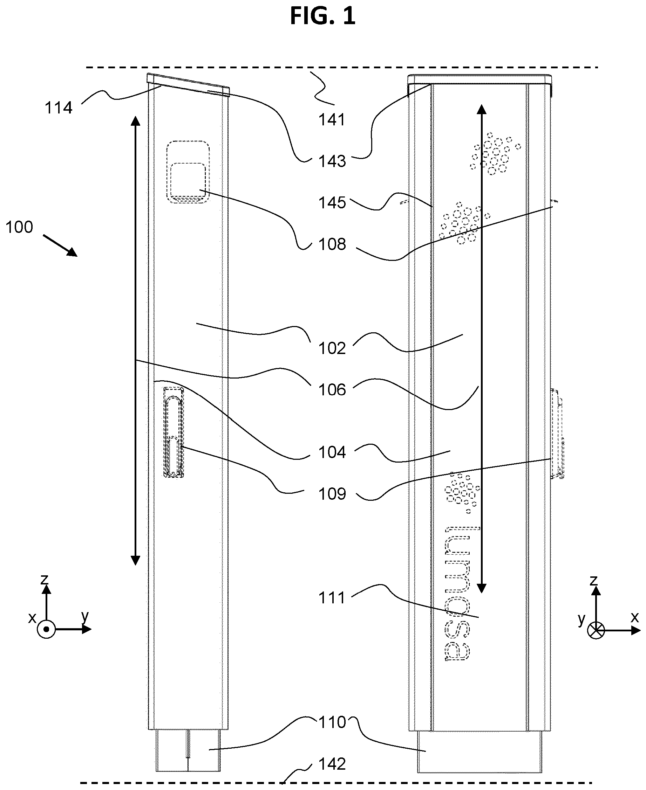

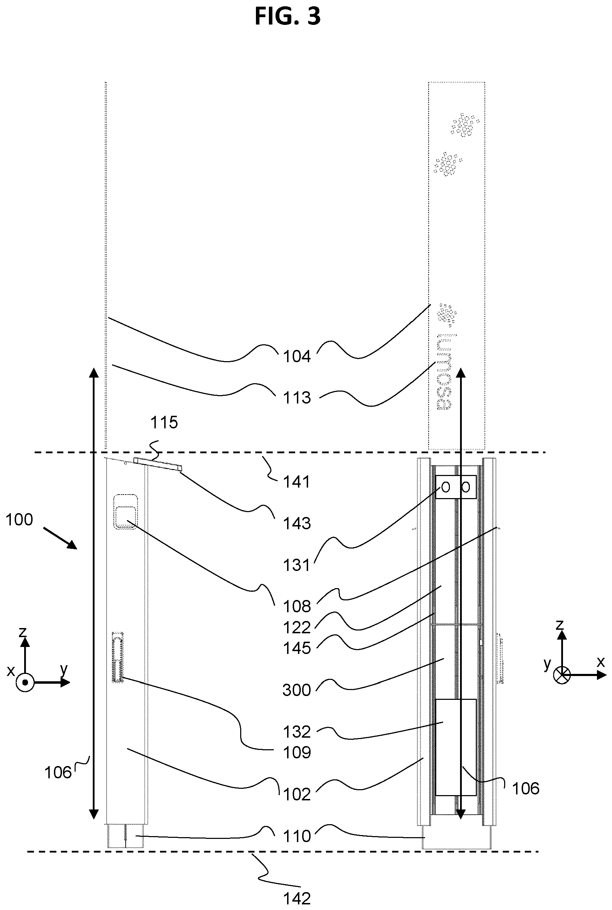

Figs. 1-3 show a charging station 100 for charging a vehicle. The figures each show a side view of the charging station 100 on the left side, and a front view of the charging station 100 on the right side. The side of the charging station 100 is in the yz-plane. The front side of the charging station 100 is in the xz-plane. The z-direction is in the vertical direction. The x- and y-directions are in the horizontal plane. The charging station 100 comprises a housing 102. The housing 102 encloses a space 300, as shown in Fig 3. The housing 102 comprises a door 104 adapted to allow access to the space 300. The door 104 is moveable along a movement path 106, relative to the housing 102. to a closed position 111, a first opened position 112 and a second opened position 113. The movement path 106 is indicated with the double sided arrow. The closed position 111 is located between the first opened position 112 and the second opened position 113 along the movement path 106. In the closed position 111, the door 104 blocks access to the space 300. In the first opened position 112, the door 104 creates a first opening 121 to allow access to the space 300. In the second opened position 113, the door 104 creates a second opening 122 to provide access to the space 300.

The charging station 100 has a moveable cover 108 arranged on a side panel of the housing 102. The moveable cover 108 covers a charging socket. The moveable cover 108 is moveable upward to uncover the charging socket, allowing a charging cable to be coupled to the charging socket. The charging station 100 has a lock 109. The lock 109 secures the door 104 in the closed position 111. By unlocking the lock 109 with a key, the door 104 becomes moveable to move to the first opened position 112 and the second opened position 113. The housing 102 forms a tubular shape with a rectangular cross-section.

As shown in Fig. 1, when the door 104 is in the closed position 111, the door 104 blocks access to the space 300 by blocking both the first opening 121 and the second opening 122.

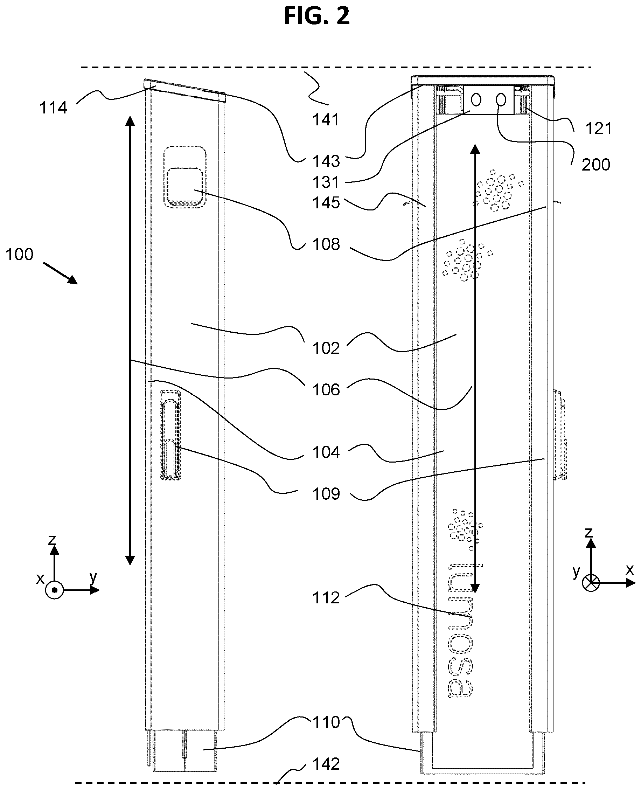

As shown in Fig. 2, the door 104 is in the first opened position 112. In the first opened position 112, the door 104 opens the first opening 121 to allow access to a first component 131. The first component 131 has an interface 200 to operate at least part of the charging station 100. The interface 200 is depicted as two buttons, for example, a reset button and a power button. The power button is configured to switch the charging station 100 from an off-status to an on-status and vice versa.

As shown in Fig. 3, the door 104 is in the second opened position 113. In the second opened position 113, the door 104 opens the second opening 122 to allow access to the second component 132. In addition, the door 104 in the second opened position 113 allows access to the first component 131.

The second opening 122 is larger than the first opening 121. As shown in Fig. 3, the second opening 122 includes the first opening 121. The second opening 122 extends along the entire height of the housing 102. The height of the housing 102 is in the vertical z-direction.

The charging station 100 comprises the first component 131 and the second component 132. Both the first component 131 and the second component 132 are arranged in the space 300. In the first opened position 112, the door 104 allows access to the first component 131 via the first opening 121 and blocks access to the second component 132. In the second opened position 113, the second opening 122 allows access to at least the second component 132. In the second opened position 113, the second opening 122 allows access to both the first component 131 and the second component 132.

The first component 131 has an interface 200 to operate at least part of the charging station 100. The first opening 121 allows access to the interface 200. In an example, the second component 132 comprises a fastener adapted to connect the first component 131 to the housing 102.

The housing 102 extends from a first plane 141 to a second plane 142. The first plane 141 and the second plane 142 are both horizontal planes. In the closed position 111 and in the first opened position 112, the door 104 is arranged between the first plane 141 and the second plane 142. In the second opened position 113, the door 104 is at least partly arranged on a side of the second plane 142 facing away from the first plane 141. As shown in Fig. 3, the door 104 is completely on the side of the second plane 142 facing away from the first plane 141.

The housing 102 comprises a top panel 143. The top panel 143 is moveable between a blocking position 114 and a free position 115. In the blocking position 114, as shown in Figs 1 and 2, the top panel 143 is arranged in the movement path 106 between the closed position 111 and the second opened position 113. In the free position 115, the top panel 143 is away from the movement path 106 to allow the door 104 to move from the closed position 111 to the second opened position 113. The door 104 is only able to be moved to the second opened position 113 if the top panel 143 is moved away from the free position 115 to the blocking position 114. The top panel 143 has a top surface that is arranged non-parallel to the horizontal plane. By arranging the top surface non-parallel to the horizontal plane, rainwater is able to flow from the top panel 143 without the risk of creating puddles.

The movement path 106 is in a vertical direction, i.e., the z-direction. The door 104 is moveable downward along the movement path 106 from the closed position 111 to the first opened position 112. The door 104 is moveable upward from the closed position 111 to the second opened position 113.

The housing 102 comprises a door guide 145 to guide the door 104 along at least a part of the movement path 106. The door 104 is slidably connected to the door guide 145. The door 104 is detachable from the door guide 145. The door 104 is detached from the door guide 145 in the second opened position 113, as is shown in Fig. 3.

When the door 104 is detached from the door guide 145, the door 104 is, for example, placed next to the charging station 100. The door 104 is, for example, placed on the ground or against a side panel or a back panel of the charging station 100.

As required, this document describes detailed embodiments of the present invention.

The various terms used in the description should not be interpreted as restrictive but rather as a comprehensive explanation of the invention.

The word "a" used herein means one or more than one, unless specified otherwise. The phrase "a plurality of' means two or more than two. The words "comprising" and "having" do not exclude the presence of more elements.

## Claims

1. A charging station (100) for charging a vehicle, the charging station (100) comprising:
a housing (102) enclosing a space (300);
wherein the housing (102) comprises a door (104) adapted to allow access to the space (300),
wherein the door (104) is moveable along a movement path (106), relative to the housing (102), to a closed position (111), a first opened position (112) and a second opened position (113),
wherein the closed position (111) is located between the first opened position (112) and the second opened position (113) along the movement path (106),
wherein, in the closed position (111), the door (104) blocks access to the space (300), wherein, in the first opened position (112), the door (104) creates a first opening (121) to allow access to the space (300),
wherein, in the second opened position (113), the door (104) creates a second opening (122) to provide access to the space (300), and
wherein the movement path (106) is in a substantially vertical direction, wherein the door (104) is moveable substantially downward along the movement path (106) from the closed position (111) to the first opened position (112), wherein the door (104) is moveable substantially upward from the closed position (111) to the second opened position (113).

2. Charging station (100) according to claim 1, wherein the second opening (122) is larger than the first opening (121).

3. Charging station (100) according to claim 2, wherein the second opening (122) includes the first opening (121).

4. Charging station (100) according to any one of the preceding claims, comprising a first component (131) and second component (132), both arranged in the space (300),
wherein, in the first opened position (112), the door (104) allows access to the first component (131) via the first opening (121) and blocks access to the second component (132),
wherein, in the second opened position (113), the second opening (122) allows access to at least the second component (132).

5. Charging station (100) according to claim 4, wherein the first component (131) has an interface (200) to operate at least part of the charging station (100), wherein the first opening (121) allows access to the interface (200).

6. Charging station (100) according to claim 4 or 5, wherein the second component (132) is adapted to connect the first component (131) to the housing (102).

7. Charging station (100) according to any one of the preceding claims, wherein the housing (102) extends from a first plane (141) to a second plane (142),
wherein, in the closed position (111) and in the first opened position (112), the door (104) is arranged between the first plane (141) and the second plane (142),
wherein, in the second opened position (113), the door (104) is at least partly arranged on a side of the second plane (142) facing away from the first plane (141).

8. Charging station (100) according to any one of the preceding claims, wherein the housing (102) comprises a top panel (143),
wherein the top panel (143) is moveable between a blocking position (114) and a free position (115),
wherein, in the blocking position (114), the top panel (143) is arranged in the movement path (106) between the closed position (111) and the second opened position (113),
wherein, in the free position (115), the top panel (143) is away from the movement path (106) to allow the door (104) to move from the closed position (111) to the second opened position (113).

9. Charging station (100) according to any one of the preceding claims, wherein the housing (102) comprises a door guide (145) to guide the door (104) along at least a part of the movement path (106), wherein the door (104) is slidably connected to the door guide (145).

10. Charging station (100) according to claim 9, wherein the door (104) is detachable from the door guide (145), wherein the door (104) is detached from the door guide (145) in the second opened position (113).

11. Method for using a charging station (100), .e.g. a charging station according to any of the claims 1-10, the charging station (100) comprising a housing (102) enclosing a space (300), wherein the housing (102) comprises a door (104) adapted to allow access to the space (300), the method comprising the steps of:
- moving the door (104) from a closed position (111) to a first opened position (112) to create a first opening (121) to allow access to the space (300),
- moving the door (104) in opposite direction from the closed position (111) to a second opened position (113) to create a second opening (122) to allow access to the space (300).

12. Method for using the charging station (100) according to claim 11, comprising the steps of:
- operating a first component (131) arranged in the space (300) via the first opening (121);
- operating a second component (132) arranged in the space (300) via the second opening (122).

13. Method for using the charging station (100) according to claim 12, wherein the step of operating a second component (132) comprises removing the second component (132) from the space (300).

## Patentansprüche

1. Ladestation (100) zum Laden eines Fahrzeugs, wobei die Ladestation
(100) Folgendes umfasst:
ein Gehäuse (102), das einen Raum (300) umschließt;
wobei das Gehäuse (102) eine Tür (104) umfasst, die dazu ausgelegt ist, Zugang zu dem Raum (300) zu ermöglichen,
wobei die Tür (104) entlang eines Bewegungspfades (106) relativ zu dem Gehäuse (102) in eine geschlossene Position (111), eine erste geöffnete Position (112) und eine zweite geöffnete Position (113) bewegbar ist,
wobei sich die geschlossene Position (111) zwischen der ersten geöffneten Position (112) und der zweiten geöffneten Position (113) entlang des Bewegungspfades (106) befindet,
wobei die Tür (104) in der geschlossenen Position (111) den Zugang zu dem Raum (300) blockiert,
wobei die Tür (104) in der ersten geöffneten Position (112) eine erste Öffnung (121) erzeugt, um Zugang zu dem Raum (300) zu ermöglichen,
wobei die Tür (104) in der zweiten geöffneten Position (113) eine zweite Öffnung (122) erzeugt, um Zugang zu dem Raum (300) bereitzustellen, und
wobei sich der Bewegungspfad (106) in einer im Wesentlichen vertikalen Richtung befindet, wobei die Tür (104) im Wesentlichen abwärts entlang des Bewegungspfades (106) aus der geschlossenen Position (111) in die erste geöffnete Position (112) bewegbar ist, wobei die Tür (104) im Wesentlichen aufwärts aus der geschlossenen Position (111) in die zweite geöffnete Position (113) bewegbar ist.

2. Ladestation (100) nach Anspruch 1, wobei die zweite Öffnung (122) größer als die erste Öffnung (121) ist.

3. Ladestation (100) nach Anspruch 2, wobei die zweite Öffnung (122) die erste Öffnung (121) beinhaltet.

4. Ladestation (100) nach einem der vorhergehenden Ansprüche, umfassend eine erste Komponente (131) und eine zweite Komponente (132), die beide in dem Raum (300) angeordnet sind,
wobei die Tür (104) in der ersten geöffneten Position (112) Zugang zu der ersten Komponente (131) über die erste Öffnung (121) ermöglicht und Zugang zu der zweiten Komponente (132) blockiert,
wobei in der zweiten geöffneten Position (113) die zweite Öffnung (122) Zugang zu mindestens der zweiten Komponente (132) ermöglicht.

5. Ladestation (100) nach Anspruch 4, wobei die erste Komponente (131) eine Benutzeroberfläche (200) zum Bedienen mindestens eines Teils der Ladestation (100) aufweist, wobei die erste Öffnung (121) Zugriff auf die Benutzeroberfläche (200) ermöglicht.

6. Ladestation (100) nach Anspruch 4 oder 5, wobei die zweite Komponente (132) dazu ausgelegt ist, die erste Komponente (131) mit dem Gehäuse (102) zu verbinden.

7. Ladestation (100) nach einem der vorhergehenden Ansprüche, wobei sich das Gehäuse (102) von einer ersten Ebene (141) zu einer zweiten Ebene (142) erstreckt,
wobei die Tür (104) in der geschlossenen Position (111) und in der ersten geöffneten Position (112) zwischen der ersten Ebene (141) und der zweiten Ebene (142) angeordnet ist,
wobei die Tür (104) in der zweiten geöffneten Position (113) zumindest teilweise auf einer Seite der zweiten Ebene (142) angeordnet ist, die von der ersten Ebene (141) weg weist.

8. Ladestation (100) nach einem der vorhergehenden Ansprüche, wobei das Gehäuse (102) eine obere Platte (143) umfasst,
wobei die obere Platte (143) zwischen einer Blockierposition (114) und einer freien Position (115) bewegbar ist,
wobei die obere Platte (143) in der Blockierposition (114) im Bewegungspfad (106) zwischen der geschlossenen Position (111) und der zweiten geöffneten Position (113) angeordnet ist,
wobei sich die obere Platte (143) in der freien Position (115) von dem Bewegungspfad (106) weg befindet, um zu ermöglichen, dass sich die Tür (104) aus der geschlossenen Position (111) in die zweite geöffnete Position (113) bewegt.

9. Ladestation (100) nach einem der vorhergehenden Ansprüche, wobei das Gehäuse (102) eine Türführung (145) umfasst, um die Tür (104) entlang mindestens eines Teils des Bewegungspfads (106) zu führen, wobei die Tür (104) verschiebbar mit der Türführung (145) verbunden ist.

10. Ladestation (100) nach Anspruch 9, wobei die Tür (104) von der Türführung (145) lösbar ist, wobei die Tür (104) in der zweiten geöffneten Position (113) von der Türführung (145) gelöst ist.

11. Verfahren zum Verwenden einer Ladestation (100), z. B. einer Ladestation nach einem der Ansprüche 1-10, wobei die Ladestation (100) ein Gehäuse (102) umfasst, das einen Raum (300) umschließt, wobei das Gehäuse (102) eine Tür (104) umfasst, die dazu ausgelegt ist, Zugang zu dem Raum (300) zu ermöglichen, wobei das Verfahren die folgenden Schritte umfasst:
- Bewegen der Tür (104) aus einer geschlossenen Position (111) in eine erste geöffnete Position (112), um eine erste Öffnung (121) zu erzeugen, um Zugang zu dem Raum (300) zu ermöglichen;
- Bewegen der Tür (104) in entgegengesetzter Richtung aus der geschlossenen Position (111) in eine zweite geöffnete Position (113), um eine zweite Öffnung (122) zu erzeugen, um Zugang zu dem Raum (300) zu ermöglichen.

12. Verfahren zum Verwenden der Ladestation (100) nach Anspruch 11, umfassend die folgenden Schritte:
- Bedienen einer ersten Komponente (131), die in dem Raum (300) angeordnet ist, über die erste Öffnung (121);
- Bedienen einer zweiten Komponente (132), die in dem Raum (300) angeordnet ist, über die zweite Öffnung (122).

13. Verfahren zum Verwenden der Ladestation (100) nach Anspruch 12, wobei der Schritt des Bedienens einer zweiten Komponente (132) das Entfernen der zweiten Komponente (132) aus dem Raum (300) umfasst.

## Revendications

1. Station de charge (100) pour charger un véhicule, la station de charge (100) comprenant :
un boîtier (102) renfermant un espace (300) ;
dans laquelle le boîtier (102) comprend une porte (104) conçue pour permettre l'accès à l'espace (300),
dans laquelle la porte (104) est mobile le long d'un trajet de déplacement (106), par rapport au boîtier (102), vers une position fermée (111), une première position ouverte (112) et une seconde position ouverte (113),
dans laquelle la position fermée (111) est située entre la première position ouverte (112) et la seconde position ouverte (113) le long du trajet de déplacement (106),
dans laquelle, en position fermée (111), la porte (104) bloque l'accès à l'espace (300),
dans laquelle, dans la première position ouverte (112), la porte (104) crée une première ouverture (121) pour permettre l'accès à l'espace (300),
dans laquelle, dans la seconde position ouverte (113), la porte (104) crée une seconde ouverture (122) pour fournir un accès à l'espace (300), et
dans laquelle le trajet de déplacement (106) est dans une direction sensiblement verticale, la porte (104) étant mobile sensiblement vers le bas le long du trajet de déplacement (106) de la position fermée (111) à la première position ouverte (112), la porte (104) étant mobile sensiblement vers le haut de la position fermée (111) à la seconde position ouverte (113).

2. Station de charge (100) selon la revendication 1, dans laquelle la seconde ouverture (122) est plus grande que la première ouverture (121).

3. Station de charge (100) selon la revendication 2, dans laquelle la seconde ouverture (122) comprend la première ouverture (121).

4. Station de charge (100) selon l'une quelconque des revendications précédentes, comprenant un premier composant (131) et un second composant (132), tous deux disposés dans l'espace (300),
dans laquelle, dans la première position ouverte (112), la porte (104) permet l'accès au premier composant (131) par l'intermédiaire de la première ouverture (121) et bloque l'accès au second composant (132),
dans laquelle, dans la seconde position ouverte (113), la seconde ouverture (122) permet l'accès au moins au second composant (132).

5. Station de charge (100) selon la revendication 4, dans laquelle le premier composant (131) présente une interface (200) pour actionner au moins une partie de la station de charge (100), dans laquelle la première ouverture (121) permet l'accès à l'interface (200).

6. Station de charge (100) selon la revendication 4 ou 5, dans laquelle le second composant (132) est conçu pour relier le premier composant (131) au boîtier (102).

7. Station de charge (100) selon l'une quelconque des revendications précédentes, dans laquelle le boîtier (102) s'étend d'un premier plan (141) à un second plan (142),
dans laquelle, dans la position fermée (111) et dans la première position ouverte (112), la porte (104) est disposée entre le premier plan (141) et le second plan (142),
dans laquelle, dans la seconde position ouverte (113), la porte (104) est au moins en partie disposée sur un côté du second plan (142) tourné à l'opposé du premier plan (141).

8. Station de charge (100) selon l'une quelconque des revendications précédentes, dans laquelle le boitier (102) comprend un panneau supérieur (143),
dans laquelle le panneau supérieur (143) est mobile entre une position de blocage (114) et une position libre (115),
**caractérisée en ce que**, dans la position de blocage (114), le panneau supérieur (143) est disposé sur le trajet de déplacement (106) entre la position fermée (111) et la seconde position ouverte (113),
dans laquelle, dans la position libre (115), le panneau supérieur (143) est éloigné du trajet de déplacement (106) pour permettre à la porte (104) de se déplacer de la position fermée (111) à la seconde position ouverte (113).

9. Station de charge (100) selon l'une quelconque des revendications précédentes, dans laquelle le boîtier (102) comprend un guide de porte (145) pour guider la porte (104) le long d'au moins une partie du trajet de déplacement (106), dans laquelle la porte (104) est reliée de manière coulissante au guide de porte (145).

10. Station de charge (100) selon la revendication 9, dans laquelle la porte (104) peut être détachée du guide de porte (145), dans laquelle la porte (104) est détachée du guide de porte (145) dans la seconde position ouverte (113).

11. Procédé d'utilisation d'une station de charge (100), par exemple une station de charge selon l'une quelconque des revendications 1 à 10, la station de charge (100) comprenant un boîtier (102) renfermant un espace (300), dans lequel le boîtier (102) comprend une porte (104) conçue pour permettre l'accès à l'espace (300), le procédé comprenant les étapes suivantes :
- le déplacement de la porte (104) d'une position fermée (111) à une première position ouverte (112) pour créer une première ouverture (121) pour permettre l'accès à l'espace (300),
- le déplacement de la porte (104) dans le sens inverse de la position fermée (111) vers une seconde position ouverte (113) pour créer une seconde ouverture (122) pour permettre l'accès à l'espace (300).

12. Procédé d'utilisation de la station de charge (100) selon la revendication 11, comprenant les étapes suivantes :
- l'actionnement d'un premier composant (131) disposé dans l'espace (300) par l'intermédiaire de la première ouverture (121) ;
- l'actionnement d'un second composant (132) disposé dans l'espace (300) par l'intermédiaire de la seconde ouverture (122).

13. Procédé d'utilisation de la station de charge (100) selon la revendication 12, dans lequel l'étape d'actionnement d'un second composant (132) comprend le retrait du second composant (132) de l'espace (300).
